# EUROPEAN PATENT APPLICATION

(11) **EP 1 953 625 A1**
(43) Date of publication of application: **06.08.2008**
(21) Application number: 07101665.3
(22) Date of filing: 02.02.2007
(51) Int. Cl.: G06F 3/033

(54) **Peripheral inputting device for computers**

(71) Applicant: Gencel, Melik, 34433 Istanbul (TR)
(72) Inventor: Gencel, Melik, 34433 Istanbul (TR)
(74) Representative: Sevinç, Erkan

(57) **Abstract**

The invention's inputting device comprises a control rod fitted with an upper portion adapted to receive a user's finger tips for effecting finger tip control. The device further comprises finger root rest cavities receiving finger roots in similar orientation in their natural resting position, the vertical line of said finger root rest cavities being partially delimited by a delimiting member. Said control rod is movable in the direction of said finger root rest cavities in the manner that the distance between finger tips and roots of a user when they are curved in their natural resting position is modified. Said control rod is secured to a belt-like front bar extending horizontally along the entire front face of said inputting device in front of an opening that allows passage of fingers that are not involved in control of said device so as to block movement thereof.

## Description

### Technical Field of the Invention

The present invention relates to an improved computer inputting device enabling a more appropriate hand positioning along with enhanced usage properties.

### Background of the Invention

A computer inputting device or as is widely known a mouse, is a device typically intended to be used for effecting displacement of a cursor on the screen or carrying out various tasks in association with cursor movement to run different software functions or to select program options.

Widely used conventional communication devices are known for their discomfort with regard to hand positioning and arm inconvenience and this alone has been a major cause for researching devices promising better arm comfort. This has indeed become a major concern in information age's long term computer use to the extent that an increasingly growing number of people are reported to have such complaints.

A "good" inputting device is simply expected to provide easy control without causing repetitive strain injuries. The regular mouse design, however, requires user's fingers to be splayed out over the mouse in a position which the palm faces down in the manner to strain hand tendons

The present invention combines a plurality of features to obtain an inputting device whose design characteristics are enhanced. Products combining regular mouse characteristics with conventional joystick design are presently available in the market. A conventional joystick may comprise a ball joint connection structure provided with a relative motion sensor installed in the base of a levier to effect displacement of the pointer. Displacement of the levier rotating within predetermined angles is then detected by a plurality of sensors and converted into corresponding displacement signals. The positional control devices, such as a conventional joystick, typically include potentiometers whose resistance changes as the user manipulates the levier. A further conventional joystick may comprise optical transmitters and optical receivers for detection of x and y coordinates.

There is a great variety of input devices intended to ease mouse usage. WO03025846 discloses an input device of the type combining features generally attributed to as a mouse or a joystick feature. The device therein essentially features a computer mouse-type transducer having a conventional mouse sensor and a joystick mounted on the mouse in the manner to be activated by a palm controlled treadle conjoined to the mouse via a ball and socket joint.

The present invention, on the other hand, proposes an improved mouse design enabling control by finger tips in the manner to additionally provide a resting position for the rest of the hand, both eliminating need for using the whole hand and/or palm and turning mouse control into a simplified reflex action. Parts of the hand not used in control of the inputting device are placed at ease when operating the mouse.

### Objects of the Invention

The primary object of the present invention is to provide a mouse that enables control by finger tips.

Another object of the present invention is to provide a mouse that ensures a resting position for the parts of the hand not used in control of the mouse.

Another object of the present invention is to provide a mouse that eliminates need for using the whole hand and/or palm.

### Summary of the Invention

The present invention proposes a computer inputting unit having a control rod providing displacement of the cursor in planar x and y coordinates. Said control rod is designed to be operated by finger tips and parts of the hand that are not in control of the inputting device are placed at ease by an ergonomic delimiting design. Where all fingers are delimited by a lower support, fingers that are not n control of the inputting device are also delimited by an upper belt portion to avoid a palm control hand position. The control rod is provided with a top portion in the form of a seat for receiving finger tips. The position of the hand while operating the device is so arranged that only parts of the hand in control of the device quit their natural resting positions.

### Brief Description of the Figures

Accompanying drawings are given solely for the purpose of exemplifying a computer inputting device whose advantages over prior art were outlined above and will be explained in detail hereinafter:

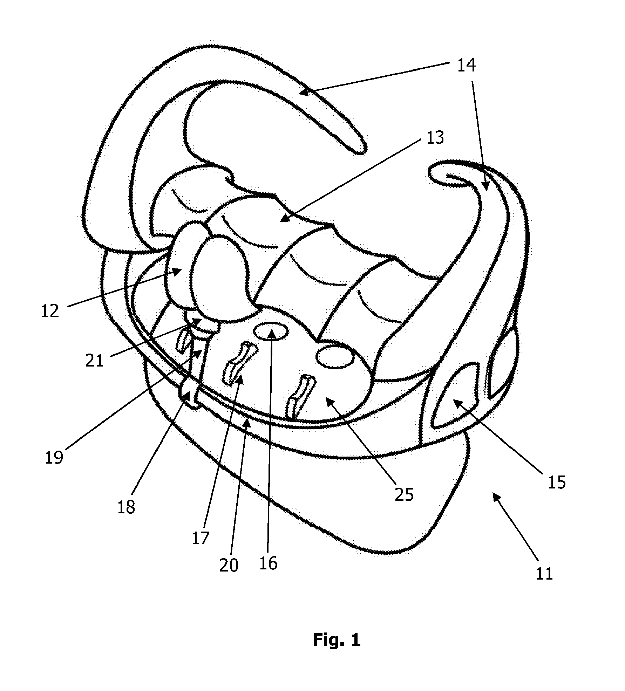

Fig. 1 demonstrates a general representative perspective side view of the inputting device according to the present invention.
Fig. 2 demonstrates a representative rear view of the inputting device according to the present invention.

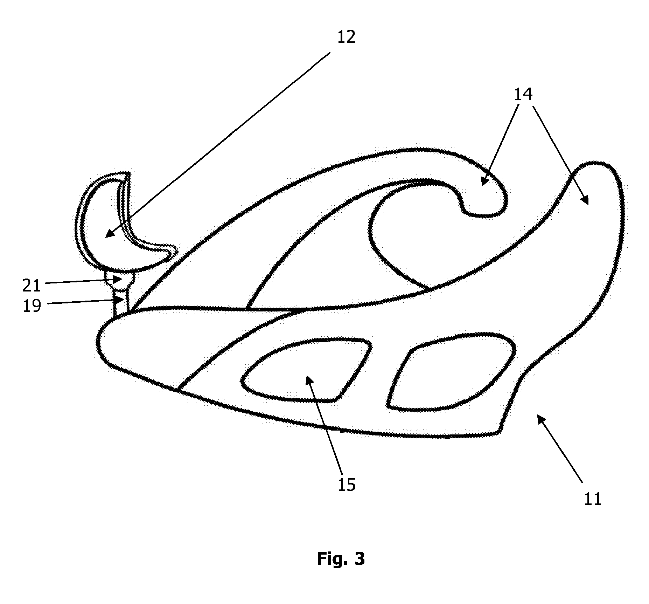

Fig. 3 demonstrates a representative side view of the upper part of the inputting device according to the present invention.

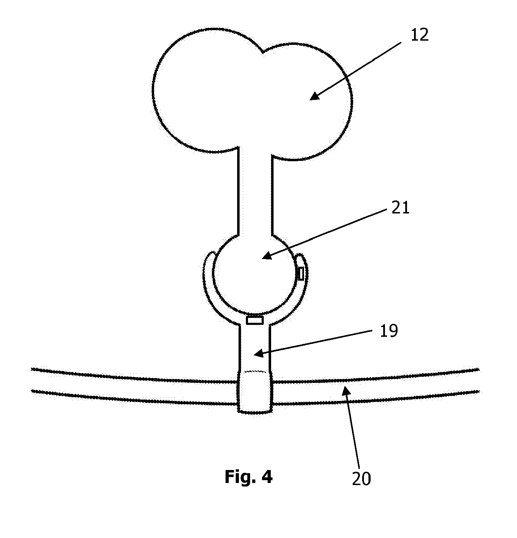

Fig. 4 demonstrates a representative view of the joystick structure according to the present invention.

### Detailed Description of the Invention

Referring now to the figures outlined above, the present invention features a computer inputting device in the form of a control rod (19) having a control mechanism (21) converting movement induced by said control rod (19) to a cursor displacement in planar x and y coordinates on a computer screen. The relative motion sensor in said control mechanism (21) senses the motion induced by the operator by way of moving said control rod (19) and translates the movement into corresponding movement of a cursor, or any other object on the display screen. Information of planar position of rotated angle and relative displacement of said control rod (19) is therefore measured. One or more transducers, e. g., one or more switches, and the transducers generate electrical signals interpreted by the computer, i.e. by an appropriate software. Motion sensors can be of the photoelectrical type and can be fitted into a mechanical ball bearing mechanism.

Since any suitable mechanism enabling conversion of movement induced by said control rod (19) to a cursor displacement in planar x and y coordinates would serve to the purpose of the present invention, it is to be appreciated that different approaches may be adopted to realize the sensing mechanism according to the present invention as long as those do not contravene the objects hereof. Said control mechanism (21) is preferably in the form of a ball-joint structure fitted with photoelectrical sensors.

The control rod (19) according to the present invention is provided with an upper portion (12) which can be moved by an operator to effect cursor displacement. Said upper portion (12) is designed to receive a user's finger tips and especially index and/or middle finger tips for operating the inputting device (11).

The core approach provided by the invention lies in that it enables mouse operation in a natural hand position, that is, when a user's hand is resting on the desk with the fingers being gently curved in their natural resting position. This is crucial for a reflexive-like comfortable control. According to the present invention, a user places his/her hand in such a position that the arrangement of the upper portion (12) of said control rod (19) and the distance between his/her finger tips and finger roots when they are curved in their natural resting position, is suitable for comfortably operating the inputting device.

To this end, the upper portion (12) of said control rod (19) is designed as a seat suitable for receiving user's finger tips. In other words, the user does not require grasping said upper portion (12) by a plurality of his/her fingers or by his/her palm for effecting mouse control. Instead, he/she needs to move his/her finger tips so as to push, pull or move sideward said upper portion (12) to effect cursor displacement on x and y axes. When the curser is needed to be moved upward or sideward, the user pushes the upper portion (12) or moves its finger seat that is receiving his/her finger tips; and when the curser is needed to be moved downward, he/she pulls the upper portion (12) toward himself/herself by pressing on its top.

The position of vertically arranged control rod (19), which is secured to a belt-like front bar (20) by a mechanical structure (18), can be set by way of sliding said front bar (20) back and forth to adjust appropriate hand position. This can be achieved by a simple mechanical mechanism (not shown) arranged at the two extremities of said front bar (20). This adjustment will let a user specify the most comfortable distance from his/her finger roots, which are conveniently resting on finger root rest cavities (13), to said control rod (19) upper part (12), when his/her fingers are gently curved in their natural resting position. It is to be appreciated that the mechanical structure (18) by which said control rod (19) is fitted into said front bar (20) can be readapted for the purpose of modifying configuration of the mechanism sensing rotated angle and relative displacement of said control rod (19). Further said mechanical structure (18) may also be adapted to displace sideward on said front bar (20).

When operating the mouse, fingers of a user are placed together on said finger root rest cavities (13) in similar orientation so as to remain in their natural resting position with the exception that only middle and/or index fingers of the user extend to operate said control rod (19), ensuring a resting position for the parts of the hand not in control of the inputting device (11). While moving the cursor, the user may conventionally press buttons (15, 16, 17) provided on the lateral surface of the mouse body (11) and in front of said finger root rest cavities (13). Lateral buttons (15) are typically designed for thumb control. Those buttons may fulfill the two most typical mouse functions. Thumb control for the most typical mouse button functions also suits to the general approach of the present invention in terms of user friendliness. Buttons (16, 17) in front of said finger root rest cavities (13) may be assigned to perform different functions or provide selection of specific functioning modes. Besides, front buttons (16, 17) may also be designed to incorporate rollers. Accordingly, each finger extending to the front may alternatively perform or activate different function by means of rollers. Therefore a user level preference to use for instance a little finger roller is met.

The present invention further envisages an upper belt in the form of a two-division delimiting member (14). The two-division structure of said delimiting member (14) and an opening (22) between the two divisions are designed to prevent simultaneous passage of the fingers but allow only a pair of them to pass through said opening (22). The opening (22), being adjusted to take place in the vertical line of the index and middle finger cavities (23, 24), ensures that only those two fingers are allowed to freely move upward for mouse operation. This is especially advantageous in that the remaining fingers can not freely move upward to take a palm control hand position as is the case in conventional mouse control. However, it is to be understood that although delimited at the top side, fingers that are not in control of the inputting device (11) may reflexively or unintentionally tend to move upward and pretend to move as in control of the device. To this end, the position of the belt-like front bar (20) can be arranged closer to the device body (11) so that those fingers, when moving upward, can preferentially be blocked by said belt-like front bar (20) and a more comfortable control can be achieved.

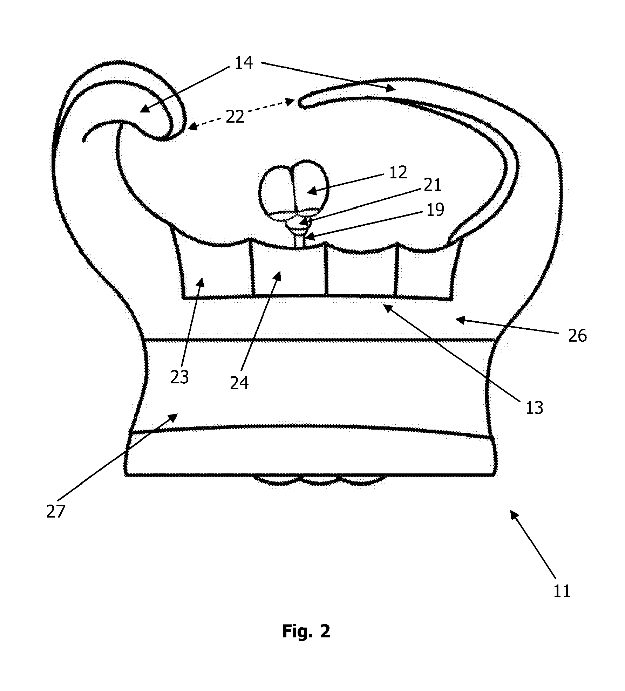

The inputting device (11) according to the present invention is formed in a two-part structure, i.e. the upper part (26) and the lower part (27) in Fig. 2. These two parts (26, 27) may further be arranged in a releasably attached manner and the lower part (27) may alternatively be adapted to be utilized for communication purposes as a conventional telephone unit either via an internet network or a general telephone communication network as is conventionally practiced.

It is to be appreciated that the device according to the present invention may be configured to be used by left handed people. To this end, special thumb function buttons (15) may be provided for ether side of the device (11). Further, it is also common practice to equip such devices with wireless communication means to establish wireless communication with the computer. In this case, the device (11) may be arranged to be freely held in hand instead of operating on a desk. In the latter case, the releasable upper part (26) fulfills this purpose along with the help of the upper delimiting member (14). Said upper delimiting member (14) may be arranged as a continuous body to ensure easier grip.

In a nutshell, the computer inputting unit of the present invention provides a joystick cursor control designed to be operated by finger tips so as to let parts of the hand not in control of the inputting device (11) be placed at ease by an ergonomic delimiting design in which all fingers are delimited by a lower support and fingers that are not n control are also delimited by an upper belt portion (14) to avoid a palm control hand position. The control rod (19) is provided with a top portion (12) in the form of a seat for receiving finger tips. The position of the hand while operating the device (11) is so arranged that only parts of the hand in control of the device (11) quit their natural resting positions.

## Claims

1. A computer inputting device (11) comprising a control rod (19) having a control mechanism (21) converting movement induced by said control rod (19) to a cursor displacement in planar x and y coordinates **characterized in that** said control rod (19) is fitted with an upper portion (12) adapted to receive a user's finger tips for effecting finger tip control and said inputting device (11) comprising finger root rest cavities (13) receiving finger roots in similar orientation in their natural resting position, the vertical line of said finger root rest cavities (13) being partially delimited by a delimiting member (14) whereby up to two fingers are involved in control of said device (11) at once, avoiding a palm control hand positioning.

2. A computer inputting device (11) as set forth in Claim 1 wherein said control rod (19) is arranged to be movable in the direction of said finger root rest cavities (13) whereby the distance between finger tips and finger roots of a user when they are curved in their natural resting position is modified.

3. A computer inputting device (11) as set forth in Claim 2 wherein said control rod (19) is secured to a belt-like front bar (20) extending horizontally along the entire front face of said inputting device in front of an opening (25) that allows passage of fingers that are not involved in control of said device so as to block movement thereof.

4. A computer inputting device (11) as set forth in Claim 1 wherein said computer inputting device (11) comprises buttons (15, 16, 17) provided on the lateral surface of the device body (11) and in front of said finger root rest cavities (13).

5. A computer inputting device (11) as set forth in Claim 1 wherein said buttons (15, 16, 17) incorporates rollers assigned to each finger.

6. A computer inputting device (11) as set forth in Claim 1 wherein said computer inputting device (11) is formed in a two-part structure (26, 27) arranged in a releasably attached manner.

7. A computer inputting device (11) as set forth in Claim 6 wherein said the lower part (27) is adapted to be utilized for communication purposes as a telephone unit.

8. A computer inputting device (11) as set forth in Claim 6 wherein said upper part (26) is provided with wireless communication means for establishing wireless communication with computer.

9. A computer inputting device (11) as set forth in Claim 8 wherein said upper delimiting member (14) is arranged as a continuous body.
